# EUROPEAN PATENT SPECIFICATION

(11) **EP 1 798 448 B1**
(45) Date of publication and mention of the grant of the patent: **25.02.2009**
(21) Application number: 06126128.5
(22) Date of filing: 14.12.2006
(51) Int. Cl.: F16H 57/02

(54) **Transport and Mounting Protection Device**
Transport- und Montageschutzvorrichtung
Dispositif de protection de tranport et de montage

(30) Priority: 16.12.2005 SE 0502816
(43) Date of publication of application: 20.06.2007
(73) Proprietor: GM Global Technology Operations, Inc., Detroit, MI 48265-3000 (US)
(72) Inventor: Englund, Fredrik, S-461 39 Trollhättan (SE)
(74) Representative: Strauss, Peter

(56) References cited:
- JP-A- 6 341 513
- JP-A- 7 286 657
- JP-A- 2003 166 625
- US-A1- 2004 182 198
- US-A1- 2005 188 784

## Description

### Field of the Invention

The present invention relates to a transport and mounting protection device for a shaft passage opening in a housing containing rotary parts, preferably a differential gear housing, comprising a mounting protection sleeve which is arranged to be inserted, before mounting of a shaft, and maintained in said shaft passage opening and which is arranged to be broken to allow, after mounting of the shaft, said mounting protection sleeve to be removed from the shaft previously inserted through said mounting protection sleeve, and a plug element for sealing said shaft passage opening in the absence of a shaft inserted therein. Furthermore, the present invention relates to a method of protecting, during mounting, a sealing ring which is mounted in a shaft passage opening of a housing containing rotary parts.

### Technical Background

Housings of different kinds, for instance transmission housings, are currently handled by various operators on the market. A subcontractor can, for instance, build the transmission housing and test run it, while another company mounts the transmission housing to a driving shaft. When handling a transmission housing, problems may arise, for instance of dirt and dust entering the housing through a driving shaft opening. Furthermore, there may be problems of oil leaking out of the housing through the driving shaft opening, for instance during transport of the housing to an assembly plant, after the test run of the transmission housing has been performed. Today, use is generally made of a cover to seal the opening of the transmission housing during transport and storage. This makes it possible to minimise the risk of oil leakage and of dirt/dust entering the housing.

When a shaft is mounted to a housing, for instance a driving shaft to a transmission housing, a sealing ring is usually arranged to seal between the shaft and the housing so as to prevent oil leakage. The sealing ring can be of different sizes and is mounted in the opening of the transmission housing at an early stage, i.e. usually when the transmission housing is being built. Subsequently, a gearbox arranged in the transmission housing is test run, and before the test run oil is added, which is evacuated after the test run. However, often residual oil remains in the transmission housing.

After the test run of the gearbox and the evacuation of oil, the driving shaft opening is sealed, usually by means of a cover as described above. Later, when the shaft is to be mounted to the transmission housing, the cover is removed so as to make the opening accessible.

When the shaft is being mounted to the housing, for instance in connection with a gearbox being mounted in a vehicle, there is a risk of the shaft damaging the sealing ring while being inserted. This risk is usually minimised by a mounting protector being arranged to protect the sealing ring during the mounting of the shaft. After the removal of the cover from the opening, the mounting protector is usually mounted. The mounting protector is subsequently removed from the sealing ring and the opening of the housing, for instance by an indication of fracture being arranged on the mounting protector.

Today, the mounting protector is provided, for instance, at the assembly line where the shaft is mounted to the transmission housing. The shaft can be mounted without the mounting protector being positioned, but then there is a risk of the sealing ring being damaged. If the sealing ring is damaged, oil may leak out of the gearbox and, if the worst comes to the worst, this may result in the gearbox breaking down when run without enough oil.

US 2005/0188784 discloses an arrangement and method for removing a shaft from a gearbox housing without having totally disassemble the housing. One embodiment incorporates a compressible retaining ring that circumscribes the output shaft. The retaining ring expands when the shaft has been inserted to a proper depth within the housing to lock the shaft in place.

Problems arise, for instance, when the mounting protector is not available at the location where the shaft is mounted. The mounting of the shaft is often performed in an assembly line. In that case, it may happen that the fitter, often due to time pressure for instance, does not always bother to stop the assembly line to wait for the protector but mounts the shaft to the housing without the mounting protector. Moreover, there are problems of the mounting protector not always being used by the fitters, even if available, as there is not always a quality control at the line to make sure that the protector is being used. There is also a risk that a fitter will forget to arrange the mounting protector before mounting the shaft.

Therefore it is desirable to provide an improved transport protection and mounting protection device.

### Summary of the Invention

The object of the invention is to at least partially eliminate the above-mentioned problems. This object is achieved according to a first aspect of the invention by a transport and mounting protection device for a shaft passage opening in a housing containing rotary parts, preferably a differential gear housing, comprising a mounting protection sleeve which is arranged to be inserted, before mounting of a shaft, and maintained in said shaft passage opening and which is arranged to be broken to allow, after mounting of the shaft, said mounting protection sleeve to be removed from the shaft previously inserted through said mounting protection sleeve, and a plug element for sealing said shaft passage opening in the absence of a shaft inserted therein. Said mounting protection sleeve and said plug element are interconnected by a loop-shaped flexible connection element, which has a length that allows the plug element to be insertable into the mounting protection sleeve by an axial motion relative to the same. By providing a transport and mounting protection device as defined above, important quality advantages are obtained. Since said mounting protection sleeve and said plug element are interconnected by a loop-shaped flexible connection element, both the mounting protection sleeve and the plug element are applied to the opening of the transmission housing at an early stage of the production process. This can, for instance, already be performed after the test run of the gearbox, before the transport to the assembly plant. It is therefore ensured that the mounting protection device is positioned when the driving shaft is to be mounted in the opening of the housing, the sealing ring thus being protected, and as a result there is a considerably lower risk of damage to the sealing ring, for instance by the sealing ring being cut up. Consequently, the design of the transport and mounting protection device according to the invention implies a reduced risk of a shaft being mounted without the mounting protection being positioned.

Furthermore, the transport and mounting protection device makes it easier to handle the transmission housing, for instance, during transport and when mounting a shaft in the opening of the housing. This is because the loop-shaped flexible connection element allows the plug element to be easily removable from the mounting protection device since said connection element can also be used as a grip. It is thus easy for the fitter to remove the plug element before the mounting of the shaft by pulling said connection element. Moreover, a transport and mounting protection device is provided in which said loop-shaped flexible connection element has a length that allows the plug element to be insertable into the mounting protection sleeve by an axial motion relative to the same. As a result, the plug element can have a shape, for instance elongated, which allows it to be reliably maintained in the mounting protection sleeve. Furthermore, the plug element can be designed so that, when being inserted into the mounting protection sleeve, a supportive effect is obtained on the mounting protection sleeve, which for instance permits the mounting protection sleeve to be designed in a suitable manner with a small material thickness.

According to one embodiment of the invention, said plug element is dimensioned so as to reach through the shaft passage opening of the shaft and into the parts which are adapted to receive said shaft, to guide and centre said parts. By providing a transport and mounting protection device according to that stated above, a transport and mounting protection device is obtained which controls the parts included in the gearbox, for instance during the transport of the gearbox. It is thus ensured that, for instance, vibrations, which may arise during transport, will not displace the parts included in the gearbox. In case of a differential gear, these parts are, for instance, the differential pinion, and it is advantageous to centre these parts so that, at a later stage, the shaft will be easily insertable into the transmission housing, for instance without the need of further adjustments.

According to one embodiment of the invention, the portion of said plug element extending, in the active position, through the mounting protection sleeve has an outer diameter which is adapted to be insertable, with a tight fit, into the mounting protection sleeve. Thanks to this design, dirt and dust are prevented from entering the transmission housing when the plug element is inserted into the mounting protection sleeve.

According to one embodiment of the invention, the mounting protection sleeve comprises at least one radial projection which, in the active position, is adapted to engage with an inner edge portion of a sealing ring positioned in the shaft passage opening. Owing to this design, the fitter can pull out said plug element from said mounting protection sleeve with a reduced risk of the mounting protection being entrained and thus coming off the transmission housing in an undesirable manner. As a result, it is ensured that the mounting protection is maintained in the shaft opening and protects, in a desired manner, the sealing ring during the insertion of the shaft.

In order to safely engage with the sealing ring, said projection suitably extends along the major part of the periphery of the mounting protection sleeve. According to an alternative embodiment, the projection can be arranged as a plurality of spaced-apart portions which are distributed along the periphery of the mounting protection sleeve.

According to one embodiment of the invention, said radial projection is a flange.

The object of the present invention is also achieved according to a second aspect of the invention by a method of protecting, during mounting, a sealing ring which is mounted in a shaft passage opening of a housing containing rotary parts, preferably a differential gear housing. Said method comprises:
- inserting a mounting protection sleeve and a plug element, before storage and/or transport, into an insertion opening in said sealing ring adapted for the insertion of a shaft,
- withdrawing the plug element, on the location of mounting said shaft, from the mounting protection sleeve which is maintained in the shaft passage opening during the insertion of the shaft,
- removing the mounting protection sleeve by breaking it off.

### Brief Description of the Drawings

The invention will now be described in more detail with reference to the accompanying drawings, which for the purpose of exemplification show currently preferred embodiments of the present invention.

Fig. 1a is a perspective view of a transport and mounting protection device according to the present invention, with the plug element inserted into the mounting protection sleeve.

Fig. 1b is a perspective view of a transport and mounting protection device according to the present invention, with the plug element withdrawn from the mounting protection sleeve.

Fig. 2 is a perspective view of a transport and mounting protection device according to the present invention in its active position in a differential gear housing.

Figs 3a-3e are sequential sectional views of a method, according to the present invention, of protecting a sealing ring during mounting.

### Description of Preferred Embodiments

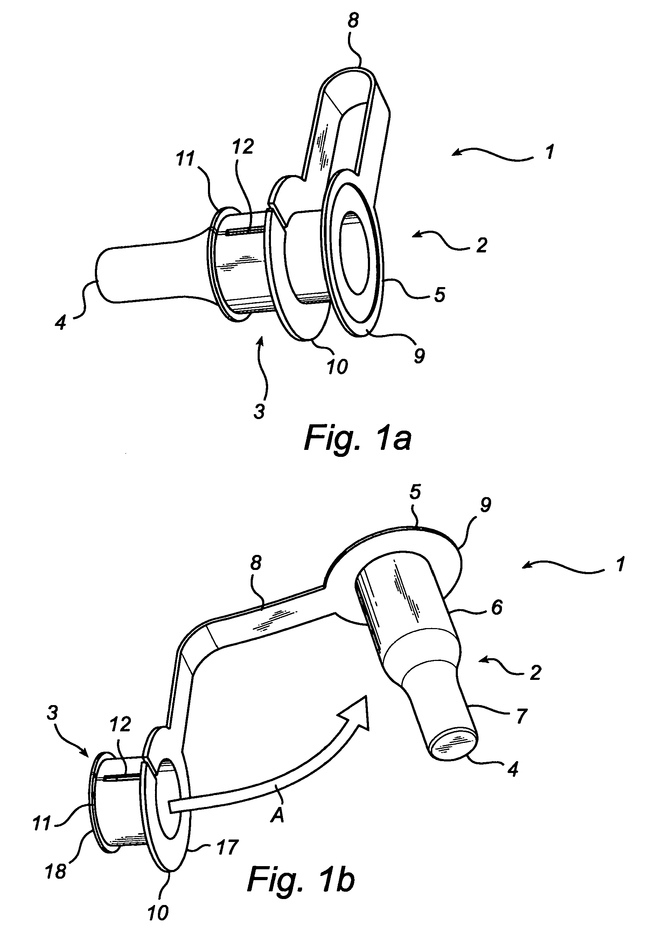

Figs 1a-b show a transport and mounting protection device 1 according to the present invention. The transport and mounting protection device 1 is a plug element 2 and a mounting protection sleeve 3 which are interconnected by a coupling element 8. According to the embodiment shown in Figs 1a-1b, this coupling element 8 is a loop-shaped flexible connection element. In Fig. 1a, the plug element 2 is inserted into the mounting protection sleeve 3, and in Fig. 1b the plug element 2 is withdrawn from the mounting protection sleeve 3. The arrow A indicates the direction in which the plug element 2 is withdrawn from the mounting protection sleeve 3.

In this preferred embodiment, the plug element 2 has the form of an elongated hollow cylinder with a distal end 4 and a proximal end 5, seen in the direction of insertion of the plug element 2 into the mounting protection sleeve 3. In this preferred embodiment, the distal end 4 of the plug element 2 is closed and its proximal end 5 is open. Furthermore, the plug element 2 has two cylindrical portions 6 and 7 with a cone-shaped transition therebetween. The portion 7 has, in this preferred embodiment, a substantially smaller outer diameter than the portion 6. The proximal end 5 of the plug element 2 has a radially projecting portion 9, which is connected to the coupling element 8 which has the form of an elongated band. The coupling element 8 suitably has such a length that the entire plug element 2 can be axially withdrawn from the mounting protection sleeve 3, without the plug element 2 being deformed. The other end of the coupling element 8 is connected to the mounting protection sleeve 3.

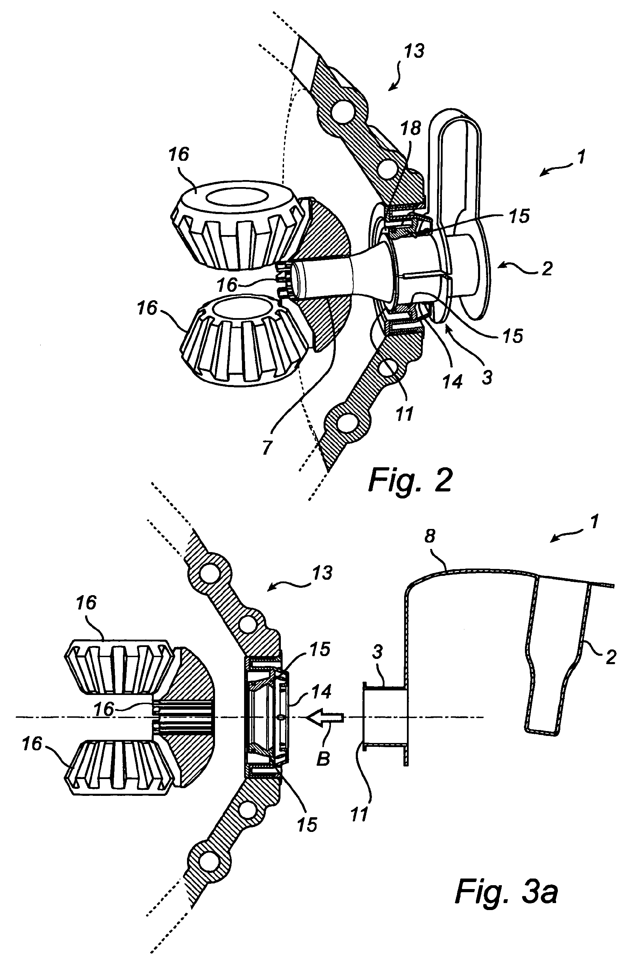

In this preferred embodiment, the mounting protection sleeve 3 has a substantially circular cross-section with a proximal end 17 and a distal end 18, seen in the direction of insertion B of the mounting protection sleeve 3 (see Fig. 3a). Furthermore, the mounting protection sleeve 3 has a radially projecting portion 10 at its proximal end 17 and a radially projecting portion 11 at its distal end 18. The radially projecting portion 11 is an example of a radial projection according to the embodiment shown in Figs 1a-1b. An indication of fracture 12 extends, according to a preferred embodiment, from the proximal end 10 along the mounting protection sleeve 3 in the direction of insertion to the distal end 18. The indication of fracture 12 suitably consists of two parts, an elongated slit and a break-off portion, such as an indication of fracture in the material. Suitably, the slit extends along half the length of the mounting protection sleeve 3. The inner diameter of the mounting protection sleeve 3 corresponds to or is greater than the outer diameter of the plug element 2 so that the plug element 2 is insertable into the mounting protection sleeve 3 by an axial motion in the longitudinal direction of the plug element 2.

Fig. 2 shows a transport and mounting protection device 1 according to the present invention in its active position in a differential gear housing 13. In the differential gear housing 13, a shaft passage opening 14 is provided, in which a sealing ring 15 is arranged to seal against a shaft 19 which is to be inserted into the shaft passage opening 14. The Figure also shows gear wheels 16 which are arranged in the differential gear housing 13. The plug element 2 extends through the shaft passage opening 14 into a gear wheel 16 and the portion 7 has a tapered shape adapted to the inner diameter of the gear wheel 16. Owing to this, the plug element 2 centres and guides the gear wheels 16, thus reducing the risk of them being displaced, for instance during the transport of the gearbox. The projecting portion 11 of the mounting protection sleeve 3 engages with an inner edge portion 18 of the sealing ring 15. As a result, the mounting protection sleeve 3 stays in place in the shaft passage opening 14, also when the plug element 2 is withdrawn from the mounting protection sleeve 3. The radial projecting portion 11 can be optionally positioned in the axial direction, depending on the design of the sealing ring.

Figs 3a-3e are sequential views of the mounting of a transport and mounting protection device 1 to a differential gear housing 13 and the sequence of events, for instance after transport of the differential gear housing 13, i.e. the withdrawal of the plug element 2, the insertion of a shaft 19 and the removal of the mounting protection sleeve 3.

Fig. 3a shows a differential gear housing 13 and a transport and mounting protection device 1 before the mounting of the transport and mounting protection device 1 in the shaft passage opening 14. The arrow B in the Figure shows the direction of insertion of the mounting protection sleeve 3 and the plug element 2 into the shaft passage opening 14. According to this preferred embodiment, the plug element 2 is not inserted in the mounting protection sleeve 3 when the transport and mounting protection device 1 is to be mounted. However, it will be understood that the mounting protection sleeve can be inserted into the shaft passage opening with the plug element inserted into the mounting protection sleeve.

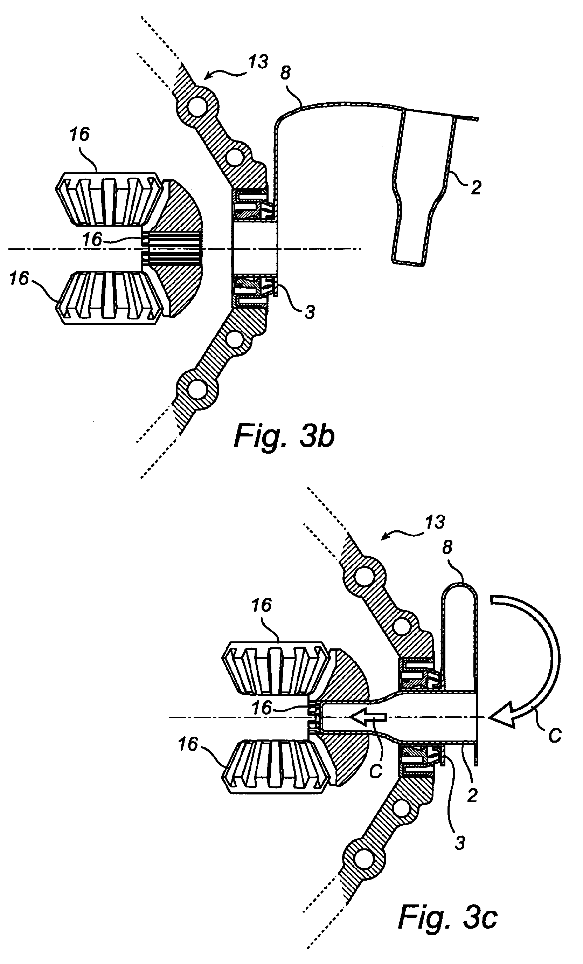

Fig. 3b shows the mounting protection sleeve 3 when inserted into the shaft passage opening 14.

Fig. 3c shows a transport and mounting protection device 1 when the plug element 2 is inserted into the mounting protection sleeve 3. The arrow C in the Figure indicates the direction of insertion of the plug element 2 into the mounting protection sleeve 3. The plug element 2 extends, as described in Fig. 2, through the mounting protection sleeve 3 and into a gear wheel 16 to guide and centre the same. After that, the differential gear housing 13 is ready to be handled, such as transported, for instance, to an assembly plant to be mounted, for instance, in a car (not shown) and connected to a driving shaft 19 in the same. The plug element 2 acts as a cover of the differential gear housing 13, thus preventing oil leakage and preventing dust and other particles from entering the housing. Furthermore, it is prevented that, for instance, vibrations occurring when handling the differential gear housing 13 displace the gear wheels 16 included in the same.

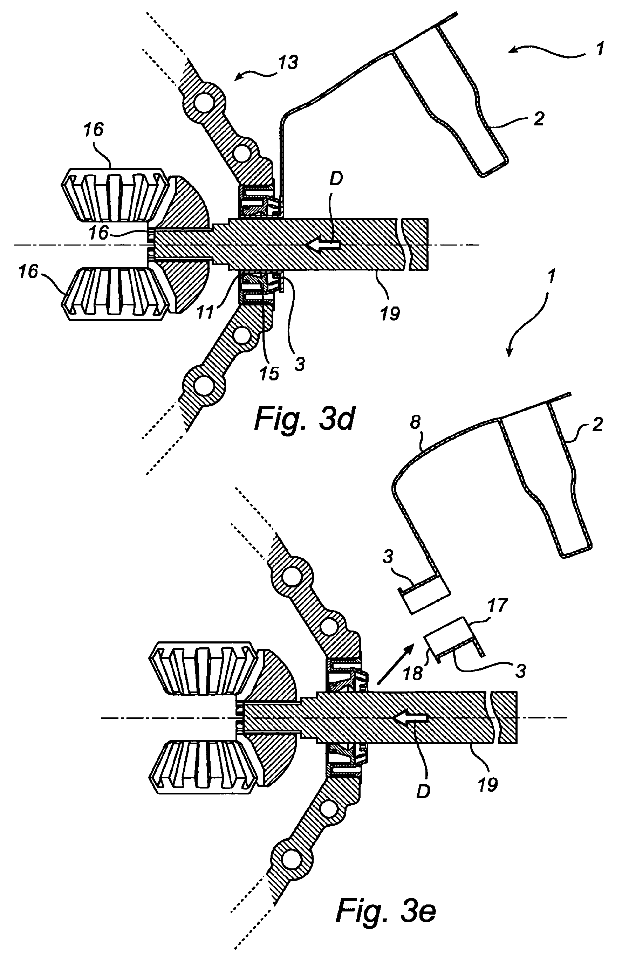

Fig. 3d shows the situation when the differential gear housing 13 has arrived, for instance, at an assembly plant (not shown) and is positioned to be mounted, for instance, to a driving shaft 19. The plug element 2 is withdrawn from the mounting protection sleeve 3 and a shaft 19 is inserted into the shaft passage opening 14. The arrow D in the Figure indicates the direction of insertion of the shaft 19 into the shaft passage opening 14. A radially projecting portion 11 of the mounting protection sleeve 3 engages with an inner edge portion of the sealing ring 15. This projecting portion 11 reduces the risk of the mounting protection sleeve 3 being entrained with the plug element 2 when this element is to be removed from the mounting protection sleeve 3. Accordingly, the mounting protection sleeve 3 is maintained in the shaft passage opening, thus protecting the sealing ring 15 during the mounting of the shaft.

Fig. 3e shows a transport and mounting protection device 1 when also the mounting protection sleeve 3 has been removed from the shaft passage opening 14. The fitter can, for instance, grasp the coupling element 8 and/or the plug element 2, which together or individually form a grip for the fitter. By pulling the coupling element 8 and/or the plug element 2, the slit can propagate from the distal end 18 of the mounting protection sleeve 3 all the way along the indication of fracture 12 to its proximal end 17. In this manner, the mounting protection sleeve is broken and can be removed from the shaft 19 in the radial direction.

It will easily be understood that a number of modifications of the preferred embodiment described above are possible within the scope of the invention. In the preferred embodiment, the plug element is in the form of a hollow cylinder, but it may also be solid.

## Claims

1. A transport and mounting protection device (1) for a shaft passage opening (14) in a housing containing rotary parts, preferably a differential gear housing (13), comprising a mounting protection sleeve (3) which is arranged to be inserted, before mounting of a shaft (19), and maintained in said shaft passage opening (14) and which is arranged to be broken to allow, after mounting of the shaft (19), said mounting protection sleeve (3) to be removed from the shaft (19) previously inserted through said mounting protection sleeve (3), and a plug element (2) for sealing said shaft passage opening (14) in the absence of a shaft (19) inserted therein, **characterised in that** said mounting protection sleeve (3) and said plug element (2) are interconnected by a loop-shaped flexible connection element (8), which has a length that allows the plug element (2) to be insertable into the mounting protection sleeve (3) by an axial motion relative to the same.

2. A transport and mounting protection device (1) as claimed in claim 1, wherein said plug element (2) is dimensioned so as to reach through the shaft passage opening (14) of the shaft (19) and into the parts (16) which are adapted to receive said shaft (19), to guide and centre said parts (16).

3. A transport and mounting protection device (1) as claimed in claim 1 or 2, wherein the portion of the plug element (2) extending, in the active position, through the mounting protection sleeve (3) has an outer diameter which is adapted to be insertable, with a tight fit, into the mounting protection sleeve (3).

4. A transport and mounting protection device (1) as claimed in any one of the preceding claims, wherein the mounting protection sleeve (3) comprises at least one radial projection (11) which, in the active position, is adapted to engage with an inner edge portion of a sealing ring (15) positioned in the shaft passage opening (14).

5. A transport and mounting protection device (1) as claimed in claim 4, wherein said projection (11) extends along the major part of the periphery of the mounting protection sleeve (3).

6. A transport and mounting protection device as claimed in claim 4 or 5, wherein said radial projection (11) is a flange.

7. A method of protecting, during mounting, a sealing ring (15) which is mounted in a shaft passage opening (14) of a housing containing rotary parts (16), preferably a differential gear housing (13), said method comprising:
- inserting a mounting protection sleeve (3) and a plug element (2), interconnected by a loop-shaped flexible connection element (8), before storage and/or transport, into an insertion opening in said sealing ring (15) adapted for the insertion of a shaft (19),
- withdrawing the plug element (2), on the location of mounting said shaft (19), from the mounting protection sleeve (3) which is maintained in the shaft passage opening (14) during the insertion of the shaft (19),
- removing the mounting protection sleeve (3) by breaking it off.

## Patentansprüche

1. Transport- und Montageschutzvorrichtung (1) für eine Wellendurchführungsöffnung (14) in einem Gehäuse mit Rotationsteilen, bevorzugt einem Differenzialgetriebegehäuse (13), mit einer Montageschutzhülse (3), die dafür eingerichtet ist, vor der Montage einer Welle (19) eingesetzt zu werden und in der Wellendurchgangsöffnung (14) zu bleiben, und die dafür eingerichtet ist, zerstört zu werden, damit nach der Montage der Welle (19) die Montageschutzhülse (3) von der zuvor durch die Montagehülse (3) eingeführten Welle (19) entfernt werden kann, sowie einem Stopfenelement (2) zur Abdichtung der Wellendurchführungsöffnung (14), wenn keine Welle (19) in diese eingesetzt ist, **dadurch gekennzeichnet, dass**
die Montageschutzhülse (3) und das Stopfenelement (2) miteinander durch ein schlaufenförmiges, flexibles Verbindungselement (8) verbunden sind, das eine Länge aufweist, die es ermöglicht, dass das Stopfenelement (2) durch eine Axialbewegung relativ zu der Montageschutzhülse (3) in diese eingesetzt werden kann.

2. Transport- und Montageschutzvorrichtung (1) nach Anspruch 1, wobei das Stopfenelement (2) so bemessen ist, dass es durch die Wellendurchführungsöffnung (14) der Welle (19) in diejenigen Teile (16) hineinreicht, die für die Aufnahme der Welle (19) eingerichtet sind, um diese Teile (16) zu führen und zu zentrieren.

3. Transport und Montageschutzvorrichtung (1) nach Anspruch 1 oder 2, wobei der Abschnitt des Stopfenelements (2), der sich in der aktiven Position durch die Montageschutzhülse (3) erstreckt, einen Außendurchmesser aufweist, der dafür angepasst ist, mit einer engen Passung in die Montageschutzhülse (3) eingesetzt zu werden.

4. Transport- und Montageschutzvorrichtung (1) nach einem der vorhergehenden Ansprüche, wobei die Montageschutzhülse (3) zumindest einen radialen Vorsprung (11) umfasst, der in der aktiven Position dafür eingerichtet ist, in einen Innenkantenabschnitt eines in der Wellendurchführungsöffnung (14) positionierten Dichtungsrings (15) einzugreifen.

5. Transport- und Montageschutzvorrichtung (1) nach Anspruch 4, wobei der Vorsprung (11) sich entlang des größten Teils der Peripherie der Montageschutzhülse (3) erstreckt.

6. Transport- und Montageschutzvorrichtung (1) nach Anspruch 4 oder 5, wobei der radiale Vorsprung (11) ein Flansch ist.

7. Verfahren zum Schutz eines Dichtungsrings (15) während der Montage, wobei der Dichtungsring (15) in einer Wellendurchführungsöffnung (14) eines Rotationsteile (16) enthaltenden Gehäuses montiert ist, bei dem es sich bevorzugt um ein Differenzialgetriebegehäuse (13) handelt, wobei das Verfahren umfasst:
das Einsetzen einer Montageschutzhülse (3) und eines Stopfenelements (2), die durch ein schlaufenförmiges, flexibles Verbindungselement (8) verbunden sind, vor der Lagerung und/oder dem Transport, in eine Einführöffnung in dem Dichtungsring (15), die für das Einsetzen einer Welle (19) eingerichtet ist,
das Zurückziehen des Stopfenelements (2) an dem Ort der Montage der Welle (19) aus der Montageschutzhülse (3), die während des Einsetzens der Welle (19) in der Wellendurchführungsöffnung (14) gehalten wird,
das Entfernen der Montageschutzhülse (3), indem diese abgebrochen wird.

## Revendications

1. Un dispositif de protection de transport et de montage (1) destiné à l'ouverture de passage d'un manche (14), placé dans un logement contenant des parties en rotation, de préférence un logement de différentiel (13), comprenant une poche de protection (3) destinée à être insérée avant la mise en place du manche (19) et maintenue dans ladite ouverture de passage du manche (14) et conçue de manière à pouvoir être cassée, permettant, après la mise en place du manche (19), à ladite poche de protection (3) d'être enlevée du manche (19) préalablement inséré, **caractérisée en ce que** ladite poche de protection (3) et ledit élément de connexion (2) sont interconnectés par un dispositif de connexion flexible (8) dont la longueur permet à l'élément de connexion (2) de s'insérer dans la poche de protection (3) via un mouvement de rotation axiale.

2. Un dispositif de protection de transport et de montage (1) tel que présenté dans la revendication 1, dans lequel ledit élément de connexion (2) est dimensionné de manière à pouvoir passer à travers l'ouverture de passage (14) du manche (19) et dans les parties (16) qui ont été adaptées de manière à recevoir ledit manche, ainsi qu'à guider et recentrer lesdites parties (16).

3. Un dispositif de protection de transport et de montage (1) tel que présenté dans les revendications 1 ou 2, dans lequel la portion dudit élément de connexion (2) s'étendant, en position active, jusque dans la poche de protection de montage (3), possède un diamètre extérieur lui permettant d'être insérable, sans jeu, dans la poche de protection de montage (3).

4. Un dispositif de protection de transport et de montage (1) tel que présenté dans les revendications précédentes, dans lequel la poche de protection de montage (3) comprend au moins une projection radiale (11) qui, en position active, est adaptée de manière à pouvoir s'engager dans une portion intérieure de l'anneau de serrage (15) positionné dans l'ouverture de passage du manche (14).

5. Un dispositif de protection de transport et de montage (1) tel que présenté dans la revendication 4, dans lequel ladite projection (11) est étendue le long de la partie principale de la périphérie de la poche de protection de montage (3).

6. Un dispositif de protection de transport et de montage tel que présenté dans les revendications 4 ou 5, dans lequel ladite projection radiale (11) est rapportée.

7. Une méthode de protection, en cours de montage, un anneau de serrage (15) monté dans l'ouverture de passage du manche (14) d'un logement contenant des parties en rotation (16) de préférence un logement de différentiel (13), ladite méthode comprenant :
- L'insertion d'une poche de protection de montage (3) et d'un élément de connexion (2), interconnectés par un dispositif de connexion flexible (8) avant stockage et/ou transport, dans une ouverture d'insertion pratiquée dans ledit anneau (15) adapté pour l'insertion du manche (19);
- Le retrait de l'élément de connexion (20, à l'emplacement de montage dudit manche (19), à partir de la poche de protection de montage (3) qui est maintenue dans l'ouverture de passage du manche (14) au cours de l'insertion dudit manche (19),
- Le retrait de la poche de protection de montage (3), en cassant cette dernière.
